# EUROPEAN PATENT APPLICATION

(11) **EP 4 372 715 A1**
(43) Date of publication of application: **22.05.2024**
(21) Application number: 22208086.3
(22) Date of filing: 17.11.2022
(51) Int. Cl.: G08G 1/0962, B60W 30/09, B60W 30/095, B60W 30/14, B60W 60/00, G08G 1/16

(54) **VEHICLE COLLISION THREAT ASSESSMENT**

(71) Applicant: Aptiv Technologies Limited, St. Michael (BB)
(72) Inventor: SCHAEFER, Maximilian, 42117 Wuppertal (DE); ZHAO, Kun, 40235 Duesseldorf (DE); BUEHREN, Markus, 40699 Erkrath (DE)
(74) Representative: Bardehle Pagenberg Partnerschaft mbB Patentanwälte Rechtsanwälte

(57) **Abstract**

The present invention relates to a computer implemented method for collision threat assessment of a vehicle, comprising: obtaining (no) context information for the surrounding of the vehicle comprising information about at least one road user; determining (120) ego occupancy information for a plurality of possible future locations of the vehicle at a plurality of future points in time based on the context information; determining (130) road user occupancy information for a plurality of possible future locations of the at least one road user at the plurality of future points in time based on the context information;
fusing (140) the ego occupancy information and the road user occupancy information to obtain fused occupancy information at each future point in time; and determining (150) a collision threat value based on the fused occupancy information. The invention also relates to a corresponding computer system, vehicle and computer program.

## Description

### Technical field

The present invention relates to a computer implemented vehicle collision threat assessment method and computer system.

### Technical background

Threat assessment is one of the key internal components to support various ADAS (Advanced Driver Assistance Systems) features or autonomous driving (AD). For either longitudinal or lateral control related applications, the vehicle needs to estimate the risk of the future maneuvers or control actions before the actual execution or decision. For example, the lane change assistant feature needs to estimate the potential collision with other vehicles in the adjacent lanes before the lane change decision can be made. In another example, a collision avoidance system (CAS) needs to estimate the potential collision with other vehicles, pedestrians or road obstacles in the future trajectory of the vehicle.

In the prior art this is done by using a dynamic based movement model to provide the future trajectory hypotheses of other road users (e.g. vehicles, pedestrians, cyclists, motorcyclists). Then the potential collision with the future trajectory of the ego vehicle (i.e. the vehicle for which the collision threat is assessed) is computed. The dynamic movement model-based prediction may provide relatively good predictions for a short time horizon, but significantly lose the accuracy at longer time horizons. This is because it cannot integrate all the context information in a complex traffic scene and the context information plays a significant role for long-term predictions.

The complexity of a traffic scene depends on a number of aspects. For example, complex road and lane structures (different intersections, round-abouts, multi-lane roads, etc.), various numbers and types of the road users (vehicles, pedestrians, cyclist, etc.) may be in the same scene and they may interact with each other and thus affect their future behaviors. Different dynamic movements of the road users are possible (e.g. straight driving, turning or stopped vehicles, highly dynamic pedestrian maneuverability, etc.). The future maneuvers of road users are unknown and multiple future maneuvers are often feasible and possible. Thus, anticipating other road users' movements in the future (e.g. a few seconds) does not only depend on their current dynamic, but also on the whole driving context around them. This normally results in multiple possible and feasible maneuvers which requires a multi-modality prediction.

As an example of vehicle interaction, a vehicle breaking will most likely cause its following vehicles to slow down. As an example of interaction with the road, a vehicle will slow down when it approaches a right turn, even when it is still driving straight forward at constant speed. These situations are very common for urban driving and a dynamic movement model based prediction and threat assessment cannot solve these real world issues. Therefore, properly estimating the future collision threat is a challenging task.

### Summary of Invention

The present invention addresses the future collision threat assessment by a computer implemented method according to claim 1, a computer system according to claim 13, a vehicle according to claim 14 and a computer program according to claim 15.

The method according to the invention comprises the steps: obtaining context information for the surrounding of the vehicle comprising information about at least one road user; determining ego occupancy information for a plurality of possible future locations of the vehicle at a plurality of future points in time based on the context information; determining road user occupancy information for a plurality of possible future locations of the at least one road user at the plurality of future points in time based on the context information; fusing the ego occupancy information and the road user occupancy information to obtain fused occupancy information at each future point in time; and determining a collision threat value based on the fused occupancy information.

According to the method of the invention, two different predictions are made, one for future positions of the ego vehicle and one for future positions of at least one other road user. The method then estimates whether it is possible that the ego vehicle and the at least other road user will collide based on the individual predictions. To this end, a collision threat value is determined based on the fused predictions. Fusing the individual predictions may for example be done by combining the individual predictions, e.g. by adding or multiplying. As the predictions are based on context information that include the at least one other road user, interactions between the vehicles can be considered for the prediction. Also, the invention allows the collision threat assessment in complex scenes involving multiple road users.

Generally, the computer implemented method according to the invention may be implemented on a processor.

The computer implemented method may further comprise the step of filtering context information by selecting a subset of the context information and basing the steps of determining ego occupancy information and road user occupancy information on the selected subset of the context information. This allows for example to take into account that the ego vehicle driver may get different information from what the on-board systems (e.g. camera, lidar, radar etc.) may detect. As an example, the output of a driver's gaze detection function could help with filtering out the road users which may not have been seen by the driver, thus assuming that the ego vehicle could potentially collide with those road users. In contrast, those road users, which are assumed to have been recognized by the driver would still be contained in the dynamic context information. Accordingly, the prediction would be based on the assumption that the ego vehicle would not collide with those road users as the driver would be aware of them. For example, if a driver properly saw a jaywalking pedestrian, then the Autonomous Emergency Braking (AEB) function may be more fine-tuned to avoid unnecessary warning or breaking and, at the same time, still be able to provide sufficient safety. In this way, unnecessary warnings or actions may be avoided. In this example, the subset of context information would be a subset of all the road users detected by the sensors of the ego vehicle. In this way, the prediction of a potential collision becomes more robust and the current traffic situation may be assessed more precisely.

The plurality of possible future locations of the vehicle and the at least one road user may be organized as a grid-map and the ego occupancy information and the road user occupancy information are overlapped in the grid-map to obtain the fused occupancy information. Because of the grid-map based prediction representation, the overlapping of the predictions between ego prediction and the at least one other road user indicates potential collision positions. Because each prediction consists of multiple time horizons, such overlapping can be done at multiple time horizons too. Thus, the overlapping results are a series of grid-maps, each of which represents potential collision positions at a certain future time horizon. Overall, the collision is estimated both spatially and temporally in a grid-based representation.

The computer implemented method may further comprise the step of triggering an ADAS (Advanced Driver Assistance Systems) functionality if the collision threat value exceeds a predetermined threshold at at least one future point in time. For example, in response to a collision warning indication, an automatic braking may be engaged. In another example, a collision warning indication may be output if the predetermined threshold is exceeded. The collision warning indication may be output to a driver and/or may be logged. Alternatively or additionally, the collision warning indication may be uploaded to a central server, for example for later assessment and analysis.

The context information may include static context information, wherein static context information represents information about the environment of the vehicle. Static context information may represent the environment of the vehicle which restricts road users' movements including movements of the ego vehicle. Examples include roads, lanes and intersections. By considering static context information, the possible future locations of the ego vehicle and the at least one road user can be restricted to possible locations. Impossible or improbable locations (e.g. offroad) can be excluded. In this way, the prediction becomes more accurate and false warnings are avoided or at least reduced.

The static context information may be represented at least in part by map data and/or traffic rules. Map data is readily available as modern cars often comprise a route guidance system. Traffic rules like for example left- or right hand driving, one-way roads, right of way, etc. are often also contained in the route guidance system and may be used as static context information improving the collision prediction.

The context information may include dynamic context information, wherein the dynamic context information represents information about the ego vehicle and/or the at least one road user. Information about the ego vehicle and/or the at least one road user may comprise for example position and velocity. Considering dynamic context information can not only improve the prediction of the location of the at least one road user but also of the ego vehicle.

The computer implemented method may further comprise the step of filtering out road users by selecting a subset of road users in the vicinity of the vehicle and basing the step of determining ego occupancy information on the selected subset of road users. As explained, this may avoid the unnecessary triggering of an ADAS functionality and/or a collision warning in case of road users that have been recognized by the ego vehicle's driver and for which the probability of a collision is rather low.

The step of obtaining context information for the vehicle may comprise obtaining maneuver information relating to the future trajectory of the vehicle, and the step of determining ego occupancy information may additionally be based on the maneuver information. In one example, maneuver information may be provided by the vehicle's direction indicator corresponding to the intent of the driver to turn left or right. In another example, the onboard route guidance system may provide information about the route the drive is likely to follow based on the planned route. In yet another example, a control unit of an autonomous or semi-autonomous vehicle may provide the planned maneuvers of the vehicle. Using planned maneuver information improves the accuracy of the prediction of possible future locations of the ego vehicle but also of other road users in view of interactions between road users.

The computer implemented method according to the invention may further comprise the step of obtaining context information for the surrounding of the vehicle comprising information about a plurality of road users. Thus, the method of the invention may not only consider a single road user besides the ego vehicle but also make predictions for more complex traffic situations in which more road users are involved.

The step of determining ego occupancy information and/or road user occupancy information may be performed by a trained artificial neural network which is trained based on training data comprising traffic situations of a plurality of moving road users. Software packages for artificial neural networks (ANNs) are readily available as is highly specialized hardware that accelerates training of such networks and inference. Once the ANN is trained, it may be used for estimating occupancy information for the ego vehicle. The same or another trained ANN may be used for estimating occupancy information for other road users. The information may then be fused as outlined above.

A further aspect of the present invention relates to a computer system comprising a processor configured to carry out steps of the computer implemented method as described herein. Regarding the advantages of the computer system over the prior art reference is made to the explanations that have been made with respect to the corresponding method. The mentioned advantages apply to the computer system as well.

Another aspect of the present invention relates to a vehicle comprising the computer system as described herein; and a plurality of sensors configured to provide sensor data, wherein the context information is determined based at least in part on the sensor data. Regarding the advantages of the vehicle over the prior art reference is made to the explanations that have been made with respect to the corresponding method. The mentioned advantages apply to the vehicle as well. In addition, it is noted that modern cars are often equipped with a plurality of sensors feeding corresponding ADAS and/or AD functions. Thus, the data delivered by such sensors can be used in the context of the present invention as well, and in principle no additional sensors need to be installed.

Another aspect of the present invention relates to a computer program comprising instructions which, when executed by a computer, cause the computer to perform a computer implemented method as described herein. Regarding the advantages of the computer program over the prior art reference is made to the explanations that have been made with respect to the corresponding method. The mentioned advantages apply to the computer program as well.

### Brief Description of the Figures

Possible embodiments of the invention are described in more detail in the following detailed description with reference to the following figures.
- Fig. 1:: illustrates an exemplary embodiment of a method according to the invention;
- Fig. 2:: illustrates occupancy information estimation in a complex traffic scene in the context of the present invention;
- Figures 3A-C:: illustrates the inclusion of planned maneuver information in estimating occupancy information in the context of the present invention; and
- Figures 4:: illustrates the effects of considering planned maneuver information for the ego vehicle for the collision estimation.

### Detailed Description of Possible Embodiments

For the sake of brevity, only a few embodiments will be described below. The person skilled in the art will recognize that the features described with reference to these specific embodiments may be modified and combined in different ways and that individual features may also be omitted. The general explanations in the sections above also apply to the more detailed explanations below.

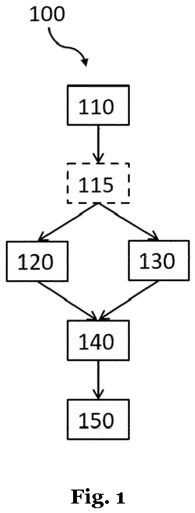

Fig. 1 illustrates an exemplary embodiment of a method 100 for the collision threat assessment of a vehicle according to the invention. In a first step 110 context information for the surrounding of the vehicle comprising information about at least one road user is obtained by a processor. The context information contains information about the surrounding of the vehicle such as the position and velocity of other road users in the vicinity of the vehicle and can be obtained by onboard sensors such as radar, lidar, optical cameras, etc. The vicinity of the vehicle can for example be defined by the maximum range of such sensors. Examples of other road users include vehicles such as cars, trucks, bicycles, motorbikes, but also pedestrians. The context information can also include information about the vehicle itself, such as its current speed and direction.

The processor can be a central processing unit (CPU), microcontroller, Application-specific integrated circuit (ASIC), Graphics processing unit (GPU), or a processor specifically tailored for machine learning applications. These examples are non-exhaustive. The processor can be fixedly connected to the vehicle. In other examples, the processor is external to the vehicle, e.g. part of a server, and the context information is provided to the processor wirelessly for example via cellular radio. The method 100 can be implemented as a series of instructions making up a computer program and executing on the processor.

In step 120 ego occupancy information for a plurality of possible future locations of the ego vehicle at a plurality of future points in time based on the context information is determined by the processor. "Ego vehicle" is commonly understood as the vehicle for which the collision threat assessment is made. Accordingly, the ego vehicle is equipped with the mentioned sensors and the mentioned context information is associated with the ego vehicle. Thus, ego occupancy information relates to the possibility of the ego vehicle being located at a particular location at a particular future point in time. A larger occupancy information value indicates a higher probability of being at a particular location compared to lower occupancy information value. The estimation in step 120 is made for a plurality of future locations which may for example be arranged in a grid around the vehicle as will be explained in more detail below. The estimation is also made for a plurality of future points in time, such that the estimate can be considered to provide a three-dimensional (two spatial dimensions and one temporal dimension) estimate of the future location of the ego vehicle.

In step 130 the processor determines road user occupancy information for a plurality of possible future locations of the at least one road user at the plurality of future points in time based on the context information. Similar to the ego occupancy information, road user occupancy information relates to the possibility of the at least one road user (being different from the ego vehicle) being located at a particular location at a particular future point in time. A larger occupancy information value indicates a higher probability of being at a particular location compared to lower occupancy information value. Just like in step 120, the determination in step 130 is made for a plurality of future locations which may for example be arranged in a grid around the ego vehicle as will be explained in more detail below. The determination is also made for a plurality of future points in time, such that the estimate can be considered to provide a three-dimensional (two spatial dimensions and one temporal dimension) estimate of the future location of the at least one road user.

It should be noted that steps 120 and 130 may be run in parallel as depicted in Fig. 1. Thus, the method does not necessarily wait to proceed with step 130 until step 120 is finished.

In step 140 the ego occupancy information and the road user occupancy information is fused to obtain fused occupancy information at each future point in time. Fusing may for example be done by assessing the ego vehicle and road user occupancy information at each possible future location at each future point in time individually. If the ego vehicle occupancy information is above a first predetermined threshold and the road user vehicle occupancy information is above a second predetermined threshold, it is inferred that there is a substantial risk of a collision. The first and second threshold may be different or identical. In another example, the ego vehicle occupancy information and the road user vehicle occupancy information is multiplied and the result is compared against a threshold. In general, any mathematical operation that leads to an estimate of the collision risk is suitable.

In step 150 the processor determines a collision threat value based on the fused occupancy information. The value may for example correspond to the probability that the ego vehicle and the at least other road user will collide at at least one future point in time. For example, if at step 140 the ego vehicle and road user occupancy information are fused by a mathematical operation (such as e.g. multiplication) that results in a single value, this value may represent the collision threat value. If at step 140 the ego vehicle occupancy information and the road user vehicle occupancy information are compared against first and second thresholds, respectively, the collision threat value maybe the result of a logical operation, for example a logical OR operation taking as inputs the results of the threshold functions. Generally, the collision threat value may be continuous or may for example have discrete states (like for example "no risk", "medium risk" and "high risk"). Generally, two states ("no risk" / "risk") are sufficient. In case of a continuous collision threat value, this value may be compared against a threshold and exceeding this threshold may trigger further actions as will be described below.

If it is determined in step 150 that there is a risk of collision of the ego vehicle with some other road user based on the collision threat value, a collision warning may be provided. The collision warning may by output to a driver and/or used to control functions of the ego vehicle. For example, in response to a collision warning indication, an automatic braking may be engaged. Generally, the collision warning indication may be provided to an ADAS (Advanced Driver-Assistance System) function. In another example, the collision warning indication may be uploaded to a central server, for example for later assessment and analysis. The warning may be transmitted via cellular radio.

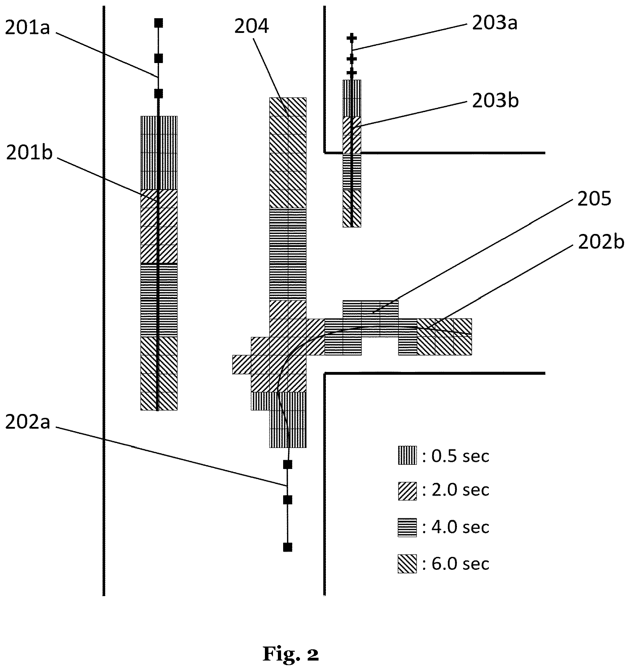

An example of how the occupancy information can be estimated in steps 120 and 130 is illustrated in Fig. 2 which depicts a traffic scene at an intersection in bird-eye perspective. The figure shows the past trajectories 201a and 202aof two vehicles and of a pedestrian 203a. More precisely, each past trajectory is sampled at three discrete points in time, wherein the squared dots represent vehicle trajectories and crosses represent the pedestrian trajectory. In an actual application, the past trajectories or discrete samples thereof could be obtained by onboard sensors of the ego vehicle. Fig. 2 also depicts the future trajectories 201b and 202b of the vehicles and of the pedestrian 203b. The future trajectories are those that the vehicles and pedestrians had actually followed in that particular scene and are also denoted as the ground truths.

Fig. 2 also depicts the predictions or estimates of the future locations of the vehicles and pedestrians at different future points in time ranging from 0.5 seconds to 6 seconds into the future. The possible future locations are arranged in a grid-map, i.e. the map is discretized into squares and to each square an occupancy information of the vehicles and pedestrians is assigned at each future point in time. For example, vehicle 202 is estimated to either move straight ahead 204 or to make a right turn 205. Both options have a similar probability which shows that multi-modal predictions or estimations are possible.

The prediction or estimate shown in Fig. 2 was made by a trained artificial neural network (ANN) denoted as CASPNet and described in more detail in Maximilian Schäfer et al., "Context-Aware Scene Prediction Network (CASPNet)" published on January 18, 2022 (arXiv:2201.06933) the content of which is incorporated herein by reference. CASPNet is also the subject of European patent application EP21191442.9 ("Methods and systems for predicting properties of a plurality of objects in a vicinity of a vehicle") the content of which is also incorporated herein by reference. Generally, a trained ANN such as CASPNet can be used in the context of the present invention to obtain the estimates or predictions of occupancy information in method steps 120 and 130. However, other methods that provide such estimates or predictions can be used as well.

The ANN or any other means of estimation or prediction is trained using a number of different real traffic scenes involving road users such as vehicles, cycles, motorbikes, trucks, pedestrians, etc. The ANN or other means of estimation or prediction is presented the past trajectories of the road users as well as any other context information such as the road, traffic signs or traffic rules as input. The past trajectories can for example be mapped onto a grid wherein a grid point hit by the past trajectory is assigned a high value and the remaining grid points are assigned a low value. Thus, the past trajectories are rasterized into the grid-map representation and used as input for the ANN (e.g. CASPNet). So the rasterization is a discretization of the position, and based on the final in-pixel position of a road user, its other properties (except the position) like for example acceleration or the type of road user are stored at that pixel position.

The ANN or other means of estimation or prediction then makes a prediction or estimate of the future trajectories of the road users. This prediction or estimate is compared against the actual trajectories (the ground truths) and a loss is calculated which basically expresses the prediction error. The aim of training the ANN or other means of estimation or prediction is to minimize the loss adjusting the weights of the ANN accordingly. The trained ANN or other means of estimation or prediction is then able to estimate or predict future trajectories of road users given unknown traffic situations. More precisely, the estimate or prediction is the occupancy information of the road users at future points in time and not an exact prediction of the future trajectory as different trajectories are almost always possible.

The method according to the invention as exemplary illustrated by means of Fig. 1 may also some comprise optional steps which will now be described in more detail. In optional step 115 the context information which had been obtained in step 110 is filtered, i.e. a part of the context information is intentionally not provided to steps 120 and 130 which estimate the occupancy information of the ego vehicle and of at least one other road user. The filtering may affect the dynamic context information and/or the static context information. Dynamic context information represents information about the at least one road user such as its position and velocity. Static context information represents information about the environment of the vehicle which may restricts road users' movements including movements of the ego vehicle. Examples include roads, lanes and intersections. In the following, different examples of filtering context information are described.

In a first example, the estimation of the ego vehicles' occupancy information does not have dynamic context information at all but only static context information. This example corresponds to predicting the ego vehicle's future position assuming no other road users are on the road. The ego vehicle is agnostic to other road users. Thus, the ego vehicle may still follow the road or lane but it does not see that e.g. a pedestrian is jaywalking or a vehicle is crossing or changing into the ego vehicle's lane from the side. The prediction for the ego vehicle and the prediction for other road users are independent of each other and there is no interaction between the ego vehicle and other road users in the sense that they are assumed to be unaware of each other. In this case, by comparing the ego prediction with the predictions for the other road users, the method according to the invention can support features such as AEB (automatic emergency breaking) or ACC (adaptive cruise control) not only for common highway scenarios but also for urban scenes.

In a second example, no dynamic context information is provided for the estimation of the ego vehicle's occupancy information. Instead, planned maneuver information of the ego vehicle is provided for the estimation. Planned maneuver information may be provided by the vehicle's direction indicator corresponding to the intent of the driver to turn left or right. In another example, the onboard route guidance system may provide information about the route the drive is likely to follow. In yet another example, a control unit of an autonomous or semi-autonomous vehicle may provide the planned trajectory of the vehicle. Providing the ego vehicle's most probable trajectory as input restricts the multi-modality nature of the long-term prediction and, thus, provides more accurate predictions for the ego vehicle's occupancy information.

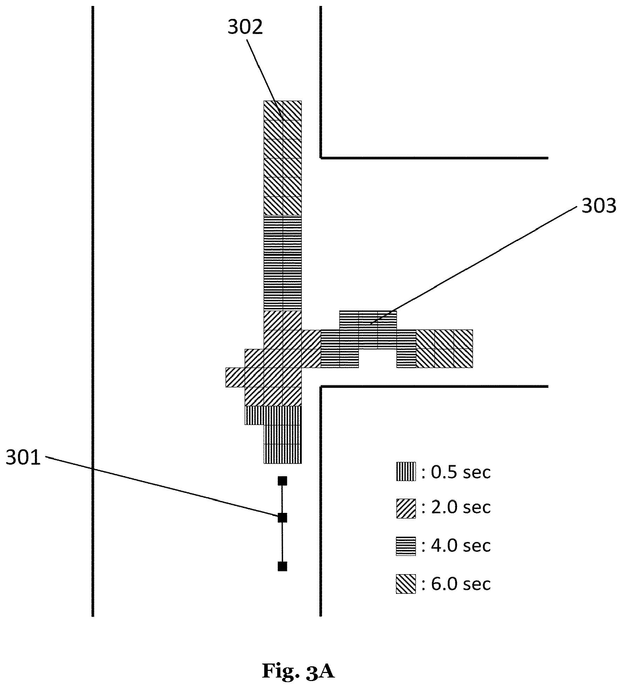

This is illustrated in more detail in Figures 3A-C which show an ego vehicle 301 at an intersection. The ego vehicle has the possibility to drive straight ahead or to turn right. Both options are possible and feasible at the time frame shown in Figures 3A-C. Thus, without knowing the intention of the vehicle or its driver, a multi-modal prediction results as shown in Fig. 3A in which the occupancy information indicates that driving straight ahead 302 is about as possible as turning right 303.

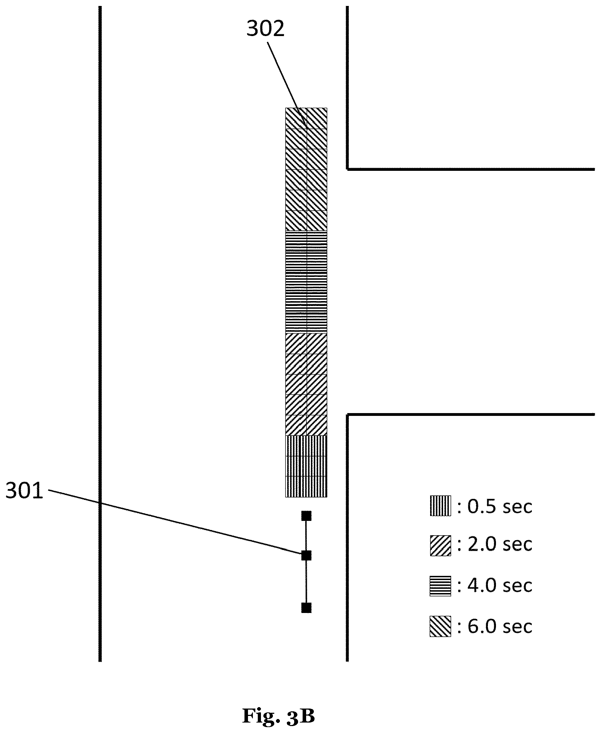

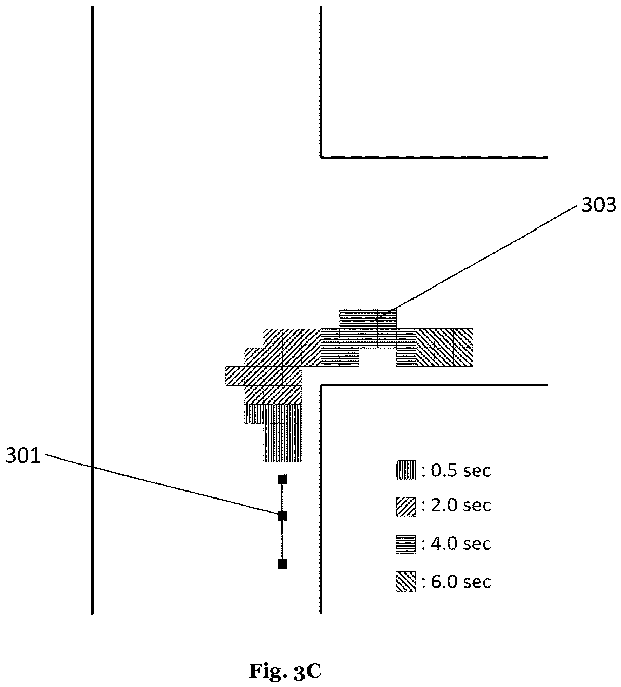

In Fig. 3B, trajectory information is provided to the prediction. In this case, the vehicle or its driver intend to drive straight ahead and the estimated occupancy information indicates that there will most probably not be a right turn. In contrast, in Fig. 3C the vehicle or its driver intend to make a right turn and the estimated occupancy information indicates that the vehicle will most probably not drive straight ahead.

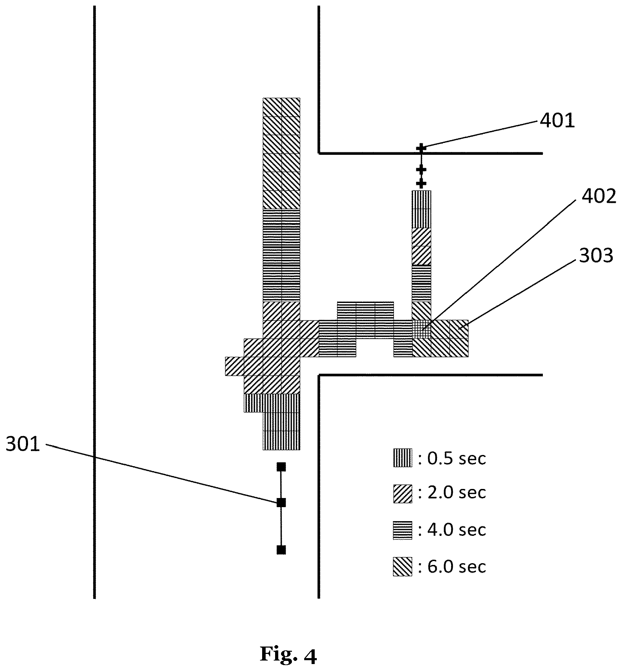

The effects of considering trajectory information for the ego vehicle for the collision estimation is demonstrated in more detail in Figure 4 which relates to the same traffic scene as depicted in Figures 3A-C. In Fig. 4 the estimated occupancy information for the ego vehicle 301 is shown taking into account the ego vehicle's intention (or of its driver) to turn right. Accordingly, the occupancy information is highest for the right turn 303. In Fig. 4 the estimation of the occupancy information for a pedestrian 401 is also shown who is just about crossing the street near the intersection (e.g. at a crosswalk). Indeed, the occupancy information indicates that the pedestrian 401 will likely be located in the middle of the street within the next few seconds. Fusing the occupancy information for the ego vehicle shown in Fig. A with the occupancy information for the pedestrian shown in Fig. 4 indicates that there is some risk of collision at grid point 402. In this case a warning could be provided to the driver or automatic breaking could be started. Notably, if the intention of the vehicle or its driver had been to drive straight ahead instead of making a right turn, the estimated collision risk would have been much lower (compare Fig. 4 with Fig. 3B).

In the first and second example of how filtering context information may be used, the whole dynamic context information is not provided for the estimation of the ego vehicle's occupancy information but only the static context is provided. One could have more detailed control over the context information by integrating with onboard sensing features. As an example, driver's gaze detection could help with filtering out the road users which may not have been seen by the driver or restrict certain static context information for the ego prediction. This could help imitating what the ego driver may see (or may not see), thus also anticipating the ego vehicle's driver future behavior, which eventually could help with more accurate threat assessment. For example, if a driver properly saw a jaywalking pedestrian, then the AEB function may be more fine-tuned to avoid unnecessary warning or breaking and, at the same time, would still be able to provide sufficient safety.

Thus, filtering certain context information may be useful to better support certain ADAS or AD function within the vehicle.

## Claims

1. Computer implemented method (100) for collision threat assessment of a vehicle, comprising:
obtaining (110) context information for the surrounding of the vehicle comprising information about at least one road user;
determining (120) ego occupancy information for a plurality of possible future locations of the vehicle at a plurality of future points in time based on the context information;
determining (130) road user occupancy information for a plurality of possible future locations of the at least one road user at the plurality of future points in time based on the context information;
fusing (140) the ego occupancy information and the road user occupancy information to obtain fused occupancy information at each future point in time;
determining (150) a collision threat value based on the fused occupancy information.

2. Computer implemented method (100) of claim 1, further comprising the step of filtering (115) context information by selecting a subset of the context information and basing the steps of determining ego occupancy information and road user occupancy information on the selected subset of the context information.

3. Computer implemented method (100) of one of claim 1-2, wherein the plurality of possible future locations of the vehicle and the at least one road user are organized as a grid-map and the ego occupancy information and the road user occupancy information are overlapped in the grid-map to obtain the fused occupancy information.

4. Computer implemented method (100) of one of claims 1-3, further comprising the step of triggering an ADAS, Advanced Driver Assistance Systems, functionality if the collision threat value exceeds a predetermined threshold at at least one future point in time.

5. Computer implemented method (100) of one of claims 1-4, wherein the context information includes static context information, wherein static context information represents information about the environment of the vehicle.

6. Computer implemented method (100) of claim 5, wherein the static context information is represented at least in part by map data and/or traffic rules.

7. Computer implemented method (100) of one of claims 1-6, wherein the context information includes dynamic context information, wherein the dynamic context information represents information about the ego vehicle and/or the at least one road user.

8. Computer implemented method (100) of one of claims 1-7, further comprising the step of filtering out (115) road users by selecting a subset of road users in the vicinity of the vehicle and basing the step of determining ego occupancy information on the selected subset of road users.

9. Computer implemented method (100) of one of claims 1-8, wherein the step of obtaining (110) context information for the vehicle comprises obtaining planned maneuver information relating to a planned maneuver of the vehicle, and wherein the step of determining ego occupancy information is additionally based on the planned maneuver information.

10. Computer implemented method (100) of one of claims 1-9, further comprising the step:
obtaining (110) context information for the surrounding of the vehicle comprising information about a plurality of road users.

11. Computer implemented method (100) of one of claims 1-10, wherein the step of determining (120, 130) ego occupancy information and/or road user occupancy information is performed by a trained artificial neural network which is trained based on training data comprising traffic situations of a plurality of moving road users.

12. Computer system comprising a processor configured to carry out steps of the computer implemented method (100) of one of claims 1 to 11.

13. Vehicle comprising:
the computer system of claim 12; and
a sensor system comprising a plurality of sensors configured to provide sensor data, wherein the context information is determined based at least in part on the sensor data.

14. Computer program comprising instructions which, when executed by a computer, cause the computer to perform a computer implemented method of one of claims 1 to 11.
